# EUROPÄISCHE PATENTSCHRIFT

(11) **EP 2 076 688 B1**
(45) Veröffentlichungstag und Bekanntmachung des Hinweises auf die Patenterteilung: **25.01.2012**
(21) Anmeldenummer: 07820866.7
(22) Anmeldetag: 02.10.2007
(51) Int. Cl.: F16F 1/38

(54) **VERFAHREN ZUM KALIBRIEREN EINER ELASTOMERFEDER EINES LAGERS**
METHOD FOR CALIBRATING AN ELASTOMER SPRING OF A MOUNT
PROCÉDÉ DE CALIBRAGE D'UN RESSORT EN ÉLASTOMÈRE D'UN PALIER

(30) Priorität: 10.10.2006 DE 102006047993
(43) Veröffentlichungstag der Anmeldung: 08.07.2009
(73) Patentinhaber: Trelleborg Automotive Germany GmbH, 64747 Breuberg (DE)
(72) Erfinder: TROYKE, Karl-Heinz, 56626 Andernach (DE)
(74) Vertreter: Preissner, Nicolaus
(86) Internationale Anmeldenummer: PCT/EP2007/060486
(87) Internationale Veröffentlichungsnummer: WO 2008/043695

(56) Entgegenhaltungen:
- EP-A- 0 499 996
- WO-A-2005/001305

## Beschreibung

Die vorliegende Erfindung betrifft ein Verfahren zum Kalibrieren einer Elastomerfeder eines Lagers, insbesondere eines Getriebelagers eines Kraftfahrzeugs. Das Lager weist ein Gehäuse und einen Lagerkern auf, wobei die Elastomerfeder den Lagerkern am Gehäuse abstützt. Ein Aufnahmeteil, das eine Aufnahmeöffnung für den Lagerkern aufweist, wird in die Elastomerfeder einvulkanisiert. Beim Einführen des Lagerkerns wird eine Vorspannung auf die Elastomerfeder aufgebracht.

Derartige Lager werden im Kraftfahrzeugbau zur Abstützung von Aggregaten, beispielsweise von Getrieben oder Motoren, eingesetzt. Ihre Aufgabe ist es, beispielsweise ein Getriebe an der Fahrzeugkarosserie zu befestigen. Weiterhin ist es Aufgabe eines solchen Lagers, eine Schwingungsisolation bereitzustellen, die die Übertragung störender Schwingungen, die eine akustische Belästigung darstellen können, an die Fahrzeugkarosserie verhindert.

Die Elastomerfeder eines solchen Lagers wird mittels eines Vulkanisationsverfahrens hergestellt. Bei der Vulkanisation treten Schrumpfungsvorgänge auf, die in dem Elastomer innere Zugspannungen bewirken, die die Lebensdauer des Lagers verkürzen können.

Da Druckspannungen die Lebensdauer von Elastomeren kaum beeinflussen, Zugspannungen die Lebensdauer jedoch stark verkürzen, wird auf die Elastomerfeder eine Vorspannung aufgebracht, die den inneren Zugspannungen entgegenwirkt und im Betrieb dafür sorgt, dass bei normaler Nutzung keine Zugspannungen auftreten.

Derartige Lager sind im Stand der Technik bekannt. So ist in der EP 0 384 007 B1 eine Hülsengummifeder gezeigt, bei der in die Elastomerfeder Halbschalen und einvulkanisiert sind. Durch das Einbringen eines inneren Federkörpers und eines inneren Anschlussteils wird die Elastomerfeder vorgespannt.

In der EP 0 499 996 A1 wird eine Vibrationsdämpfungsvorrichtung gezeigt, die Vibrationen eines Motors absorbieren soll. Die Vorrichtung umfasst ein äußeres zylindrisches Gehäuse, eine Elastomerfeder und zwei in die Elastomerfeder einvulkanisierte Metallclips. Die Metallclips haben einen näherungsweise T-förmigen Querschnittt, wobei die jeweils inneren Grundflächen des T sich um den Mittelpunkt des Zylinders gegenüberliegen. Die Enden der inneren Grundflächen sind zum Mittelpunkt des Zylinders hin umgebogen, so dass sich Führungen für einen inneren Zylinder ergeben. Wenn der innere Zylinder eingesetzt wird, werden die Clips nach außen gedrückt und so die Elastomerfeder vorgespannt.

Das Dokument WO 2005/001305 A2 offenbart ein verfahren gemäß Oberbegriff des Anspruchs 1.

Es ist Aufgabe der vorliegenden Erfindung, ein Verfahren zur Herstellung eines Lagers vorzuschlagen, bei dem sich die Vorspannung der Elastomerfeder und damit auch die dynamischen Eigenschaften des Lagers auf einfache und kostengünstige Weise einstellen lassen.

Zur Lösung dieser Aufgabe wird ein Verfahren nach Patentanspruch 1 vorgeschlagen.

Erfindungsgemäß weist das Aufnahmeteil zumindest eine erste Kernführung und eine zweite Kernführung auf, zwischen denen der Lagerkern gehalten wird. Weiter weist das Aufnahmeteil einen Steg auf, der die Kernführungen in einem ersten Zustand miteinander verbindet und der vor oder bei dem Einsetzen des Lagerkerns entfernt wird.

Hierdurch ergibt sich der Vorteil, dass es möglich ist, die Form und Größe der Aufnahmeöffnung für den Lagerkern sehr präzise festzulegen. Weiterhin ist die Beabstandung der Kernführungen voneinander mittels eines dazwischenliegenden Stegs einfacher zu realisieren als im Stand der Technik, da die Kernführungen bei der Herstellung der Elastomerfeder nicht mehr einzeln positioniert werden müssen.

Vorteilhafte Ausgestaltungen des erfindungsgemäßen Verfahrens sind Gegenstand der Unteransprüche.

Vorteilhaft werden bei dem erfindungsgemäßen Verfahren die erste Kernführung und die zweite Kernführung des Aufnahmeteils einander gegenüberliegend angeordnet und der Lagerkern zwischen den Kernführungen eingesetzt. Dies hat den Vorteil, dass keine weiteren Produktionsmittel dazu vorgesehen werden müssen, den Lagerkern bei Bewegung in Richtung der Kernführungen weiter abzustützen.

Eine weitere vorteilhafte Ausgestaltung des Verfahrens besteht darin, dass die Aufnahmeöffnung zwischen der ersten Kernführung und der zweiten Kernführung beim Einsetzen des Lagerkerns zunächst aufgeweitet wird, woraufhin der Steg entfernt wird.

Die Länge des Stegs legt vorteilhaft den Abstand der ersten Kernführung von der zweiten Kernführung fest.

Besonders vorteilhaft ist es, die gewünschte Vorspannung der Elastomerfeder dadurch zu verändern, dass die Maße des zwischen die Kernführungen einzusetzenden Lagerkerns verändert werden. Die Veränderung der Maße des Lagerkerns ist durch einfache Metallbearbeitung zu erreichen, während für eine Veränderung der Form der Elastomerfeder das zu ihrer Herstellung verwendete Werkzeug verändert werden muss, was aufwendig und teuer ist. Nachfolgend wird die Erfindung anhand eines Ausführungsbeispiels näher erläutert, das in den Zeichnungen schematisch dargestellt ist. Dabei zeigen:
- Fig. 1: eine perspektivische Ansicht einer Ausführungsform eines mit dem erfindungsgemäßen Verfahren erhältlichen Lagers;
- Fig. 2: eine schematische Draufsicht auf das Lager aus Fig. 1;
- Fig. 3: eine Querschnittsansicht durch das Lager aus Fig. 2 entlang der Linie III-III, wobei zusätzlich eine Getriebestütze zu sehen ist;
- Fig. 4: eine perspektivische Querschnittsansicht einer bevorzugten Ausführungsform eines Aufnahmeteils zur Durchführung des erfindungsgemäßen Verfahrens;
- Fig. 5: eine Draufsicht auf das Aufnahmeteil in Fig. 4.

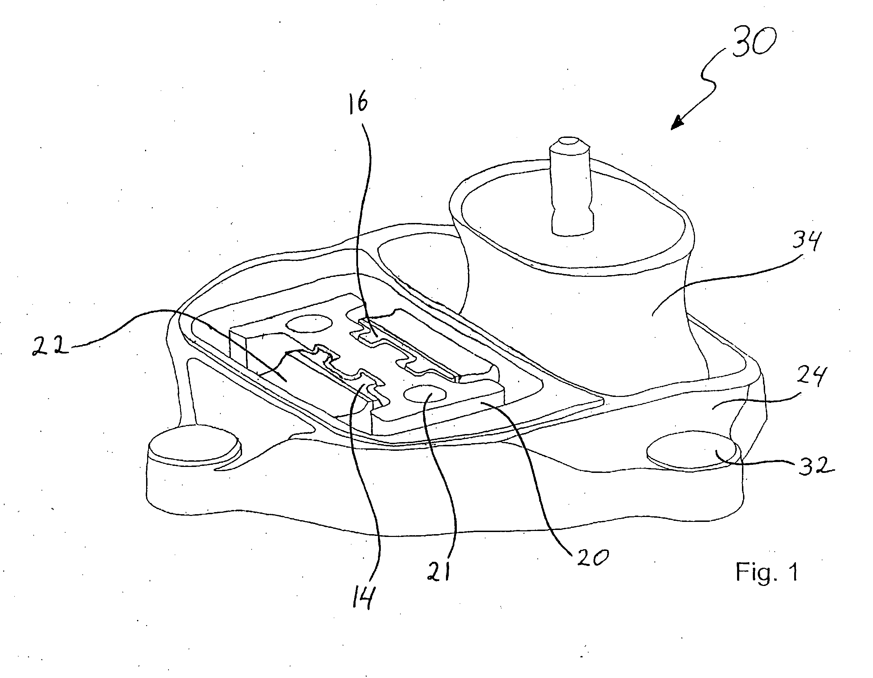

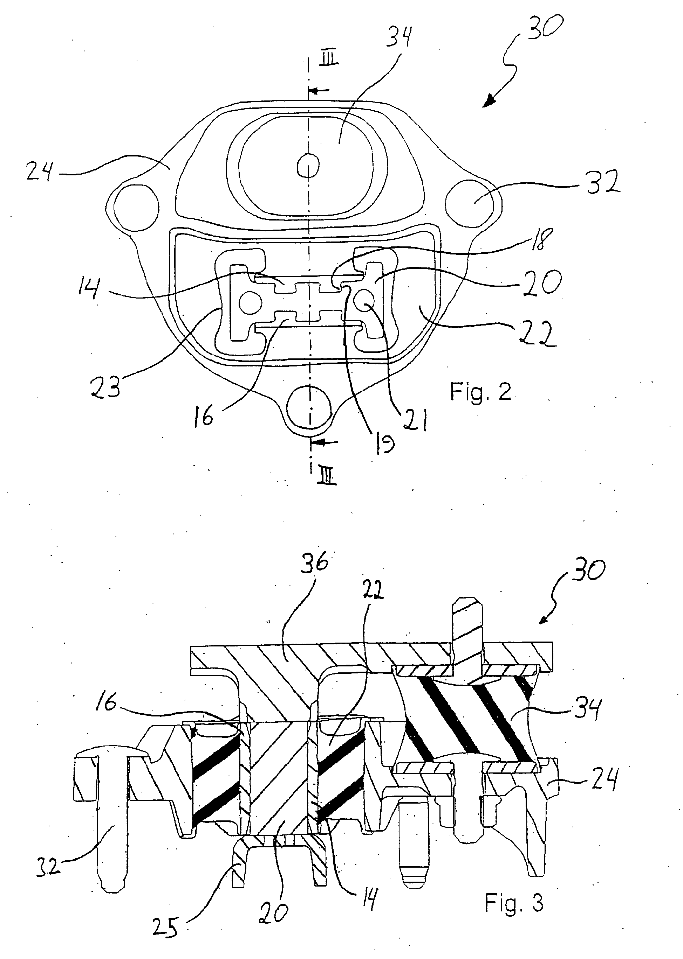

Das in den Fig. 1 und 2 dargestellte Lager 30 besteht aus einem Gehäuse 24, das mit Befestigungsmitteln 32 an einer Fahrzeugkarosserie, befestigt ist. An dem Gehäuse 24 ist eine Elastomerfeder 22 festgelegt, in die ein Aufnahmeteil 10 für einen Lagerkern 20 einvulkanisiert ist.

Fig. 3 zeigt, dass in dem Lagerkern 20 Befestigungsöffnungen 21 zur Anbringung einer Getriebestütze 36, vorgesehen sind. Zur weiteren Beeinflussung der dynamischen Eigenschaften des Lagers ist ein Puffer 34 vorgesehen, der mittels der Getriebestütze 36 mit der Elastomerfeder 22 parallel geschaltet ist.

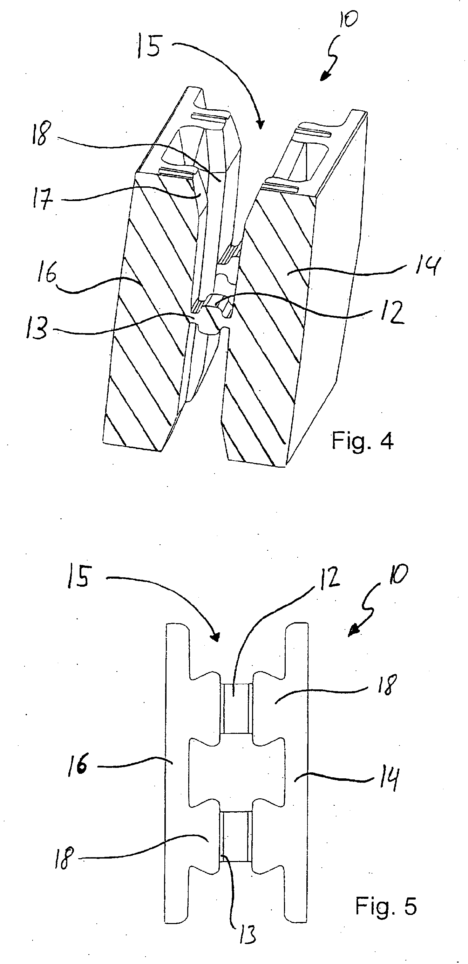

Das Aufnahmeteil 10 ist in den Fig. 4 und 5 gezeigt. Das Aufnahmeteil 10, das aus Kunststoff besteht, weist eine erste Kernführung 14 und eine zweite Kernführung 16, die durch Stege 12 beabstandet wird, auf.

Die Kernführungen 14, 16 weisen jeweils Führungsschienen 18 auf, die der Anbringung des Lagerkerns 20 dienen, der korrespondierende Führungsnuten 19 aufweist.

Die Stege 12 verbinden die Kernführungen 14, 16 im Bereich der Führungsschienen 18. Durch die Länge der Stege 12 wird der Abstand der Kernführungen 14, 16 voneinander festgelegt.

Um die Stege 12 einfacher entfernen zu können sind an den Übergangsstellen zu den Kernführungen 14, 16 Einschnürungen 13 in der Art von Sollbruchstellen vorgesehen.

Wird der Lagerkern 20 eingesetzt, so wird zunächst die Aufnahmeöffnung 15 (siehe Fig. 4 und 5) mit einem Werkzeug (nicht gezeigt) aufgeweitet. Dabei reißen die Stege 12 bevorzugt an den Einschnürungen 13 auf einer Seite ab.

Alternativ können die Stege 12 mit einem Abscherwerkzeug (nicht gezeigt) entfernt werden, bevor der Lagerkern 20 eingesetzt wird. Ebenso ist es möglich, die Stege 12 durch das Einsetzen des Lagerkerns 20 zu entfernen.

An den Kernführungen 14, 16 sind Führungsschienen 18 vorgesehen, die in Führungsnuten 19 des Lagerkerns 20 eingreifen und damit festlegen. Weiter sind Einführschrägen 17 an den Kernführungen 14, 16 vorgesehen, die das Einführen des Lagerkerns 20 zwischen den Kernführungen 14, 16 erleichtern.

Durch das Einführen des Lagerkerns 20 zwischen den Kernführungen 14, 16 werden die Kernführungen 14, 16 des Aufnahmeteils 10 auseinandergeführt, wodurch die Elastomerfeder 22 vorgespannt wird. Dabei ist der Grad der Vorspannung von der Breite des einzusetzenden Lagerkerns 20 abhängig.

Wird der Lagerkern 20 breiter gewählt, so erhöht sich die Vorspannung der Elastomerfeder 22. Ist andererseits die Breite des Lagerkerns 20 geringer, so ist die Vorspannung der Elastomerfeder 22 reduziert.

Weiterhin sind in einer bevorzugten Ausführungsform Wölbungen der Elastomerfeder 22 als Begrenzungsanschläge 23 vorgesehen, die eine übermäßige Auslenkung des Lagerkerns 20 in Richtung seiner Kurzseiten und damit eine Zerstörung der Elastomerfeder 22 verhindern.

Zur erfindungsgemäßen Herstellung des Lagers wird das Gehäuse 24 und das Aufnahmeteil 10 in die Vulkanisationsform eingelegt. Nachfolgend wird der Elastomerkörper eingespritzt und ausvulkanisiert. Nach der Entnahme aus der Vulkanisationsform wird die Aufnahmeöffnung 15 aufgeweitet. Dadurch reißen die Stege 12 einseitig ab. Die Stege 12 werden dann durch ein Abscherwerkzeug entfernt. Danach wird der Lagerkern 20 zwischen die Kernführungen 14, 16 eingesetzt.

Das hier beschriebene Verfahren zur Herstellung des Lagers erlaubt es vorteilhaft, durch einfache und kostengünstig durchzuführende Produktionsschritte die dynamischen Eigenschaften, insbesondere die Schwingungsisolation des Lagers, einzustellen. Anstatt für jede Einbausituation eine neue Form der Elastomerfeder 22 konstruieren zu müssen, was aufgrund des damit ebenfalls zu ändernden Vulkanisationswerkzeugs sehr kostenintensiv ist, muss nur die Breite des Lagerkerns 20 angepasst werden. Dies ist mit bekannten Verfahren der Metallbearbeitung vergleichsweise einfach durchzuführen.

### Bezugszeichen liste

- 10: Aufnahmeteil
- 12: Steg
- 13: Einschnürung
- 14: Erste Kernführung
- 15: Aufnahmeöffnung
- 16: Zweite Kernführung
- 17: Einführschräge
- 18: Führungsschiene
- 19: Führungsnut
- 20: Lagerkern
- 21: Befestigungsöffnung
- 22: Elastomerfeder
- 23: Begrenzungsanschlag
- 24: Gehäuse
- 30: Getriebelager
- 32: Befestigungsmittel
- 34: Puffer
- 36: Getriebestütze

## Patentansprüche

1. Verfahren zum Kalibrieren einer Elastomerfeder (22) eines Lagers, insbesondere eines Getriebelagers (30) eines Kraftfahrzeugs, wobei das Lager ein Gehäuse (24) und einen Lagerkern (20) aufweist, wobei die Elastomerfeder (22) den Lagerkern (20) am Gehäuse (24) abstützt, wobei ein Aufnahmeteil (10) in die Elastomerfeder (22) einvulkanisiert wird, das eine Aufnahmeöffnung (15) für den Lagerkern (20) aufweist und wobei beim Einführen des Lagerkerns (20) eine Vorspannung auf die Elastomerfeder (22) aufgebracht wird, wobei das Aufnahmeteil (10) zumindest eine erste Kernführung (14) und eine zweite Kernführung (16) aufweist, zwischen denen der Lagerkern (20) gehalten wird, **dadurch gekennzeichnet, dass** das Aufnahmeteil (10) einen Steg (12) aufweist, der die Kernführungen (14, 16) in einem ersten Zustand miteinander verbindet und der vor oder bei dem Einsetzen des Lagerkerns (20) entfernt wird.

2. Verfahren nach Anspruch 1, **dadurch gekennzeichnet, dass** die erste Kernführung (14) und die zweite Kernführung (16) des Aufnahmeteils (10) einander gegenüberliegend angeordnet sind und dass der Lagerkern (20) zwischen den Kernführungen (14, 16) eingesetzt wird.

3. Verfahren nach Anspruch 2, **dadurch gekennzeichnet, dass** die Aufnahmeöffnung (15) zwischen der ersten Kernführung (14) und der zweiten Kernführung (16) zunächst aufgeweitet wird und dann der Steg (12) entfernt wird.

4. Verfahren nach einem Ansprüche 2 oder 3, **dadurch gekennzeichnet, dass** die Länge des Stegs (12) den Abstand der ersten Kernführung (14) von der zweiten Kernführung (16) festlegt.

5. Verfahren nach einem der voranstehenden Ansprüche, **dadurch gekennzeichnet, dass** abhängig von der gewünschten Vorspannung der Elastomerfeder (22) die Maße des einzusetzenden Lagerkerns (20) verändert werden.

## Claims

1. Method for calibrating an elastomer spring (22) of a mount, in particular a transmission mount (30) of a motor vehicle, wherein the mount has a housing (24) and a mount core (20), wherein the elastomer spring (22) supports the mount core (20) on the housing (24), wherein a receiving part (10) is vulcanized into the elastomer spring (22), that the receiving part (10) has a receiving opening (15) for the mount core (20) and wherein, on insertion of the mount core (20), a preload is applied to the elastomer spring (22) wherein the receiving part (10) has at least one first core guide (14) and a second core guide (16) between which the mount core (20) is held, **characterised in that** the receiving part (10) has a web (12) which connects the core guides (14, 16) to one another in a first state and which is removed before or during the insertion of the mount core (20).

2. Method according to claim 1 **characterised in that** the first core guide (14) and the second core guide (16) of the receiving part (10) are arranged opposite each other and that the mount core (20) is inserted between the core guides (14, 16).

3. Method according to claim 2 **characterised in that** the receiving opening (15) between the first core guide (14) and the second core guide (16) is initially widened and then the web (12) is removed.

4. Method according to one of the claims 2 or 3 **characterised in that** the length of the web (12) determines the distance of the first core guide (14) from the second core guide (16).

5. Method according to one of the previous claims **characterised in that** the dimensions of the mount core (20) to be inserted are changed depending on the desired preloading of the elastomer spring (22).

## Revendications

1. Procédé pour le calibrage d'un ressort en élastomère (22) d'un palier, en particulier d'un palier de boîte de vitesses (30) d'un véhicule automobile, dans lequel le palier comprend un boîtier (24) et un noyau de palier (20), le ressort en élastomère (22) soutenant le noyau de palier (20) sur le boîtier (24), dans lequel une pièce de réception (10) est intégrée par vulcanisation dans le ressort en élastomère (22), ladite pièce comprenant une ouverture de réception (15) pour le noyau de palier (20), et lors de l'introduction du noyau de palier (20) une précontrainte est appliquée sur le ressort en élastomère (22), ladite pièce de réception (10) comprenant au moins un premier guidage de noyau (14) et un second guidage de noyau (16) entre lesquels le noyau de palier (20) est maintenu, **caractérisé en ce que** la pièce de réception (10) comprend une barrette (12) qui, dans un premier état, relie les guidages de noyau (14, 16) l'un à l'autre, et qui est supprimée avant ou pendant la mise en place du noyau de palier (20).

2. Procédé selon la revendication 1, **caractérisé en ce que** le premier guidage de noyau (14) et le second guidage de noyau (16) de la pièce de réception (10) sont agencés à l'opposé l'un de l'autre, et **en ce que** le noyau de palier (20) est mis en place entre les guidages de noyau (14, 16).

3. Procédé selon la revendication 2, **caractérisé en ce que** l'ouverture de réception (15) entre le premier guidage de noyau (14) et le second guidage de noyau (16) est tout d'abord élargie, et ensuite la barrette (12) est supprimée.

4. Procédé selon l'une des revendications 2 ou 3, **caractérisé en ce que** la longueur de la barrette (12) fixe la distance du premier guidage de noyau (14) vis-à-vis du second guidage de noyau (16).

5. Procédé selon l'une des revendications précédentes, **caractérisé en ce que** le les dimensions du noyau de palier (20) à mettre en place sont modifiées en fonction de la précontrainte désirée du ressort en élastomère (22).
